Europäisches Patentamt

European Patent Office

Office européen des brevets

(11) Publication number: **0 270 180 B1**

# EUROPEAN PATENT SPECIFICATION

(45) Date of publication of patent specification: **22.05.91**    (51) Int. Cl.⁵: **A01D 45/02, A01D 57/22**

(21) Application number: **87202342.9**

(22) Date of filing: **27.11.87**

(54) Device for harvesting maize.

(30) Priority: **01.12.86 NL 8603053**

(43) Date of publication of application:
**08.06.88 Bulletin 88/23**

(45) Publication of the grant of the patent:
**22.05.91 Bulletin 91/21**

(84) Designated Contracting States:
**AT DE FR NL**

(56) References cited:
**EP-A- 0 099 527**
**DE-A- 2 064 991**
**FR-A- 2 548 518**
**FR-A- 2 559 995**

(73) Proprietor: **P.J. Zweegers en Zonen Land-bouwmachinefabriek B.V.**
**Nuenenseweg 165**
**NL-5667 KP Geldrop(NL)**

(72) Inventor: **Quataert, Petrus Marinus**
**Berg 73**
**NL-5671 DB Nuenen(NL)**

(74) Representative: **Noz, Franciscus Xaverius, Ir. et al**
**Algemeen Octrooibureau P.O. Box 645**
**NL-5600 AP Eindhoven(NL)**

EP 0 270 180 B1

## Description

The invention relates to a device for harvesting maize, provided with a frame and with a pair of harvesting means rotatably journalled in the frame about upwardly extending axes of rotation, said harvesting means each being provided with a number of groups of curved fingers placed above one another, said groups being regularly spaced in circumferential direction, whereby during operation each group of fingers can be pivoted forwards and backwards about a pivot axis extending parallel to the axis of rotation of the relevant harvesting means by means of a steering mechanism.

From DE-A-3.406.551, there is known a harvesting device, wherein a harvesting means is basically formed by a comparatively flat disc, on the outer circumference of which there are mounted groups of fingers consisting of two fingers, whereby the one finger bears against the bottom side of the disc-shaped means and the other finger bears against the upper side of said disc-shaped means, so that the distance between the two fingers is only small. Besides that the device is provided with a counter knife having a fixed position near the outer circumference of the disc-shaped harvesting means and extending at an angle of $\pm 160°$ along the outer circumference of the harvesting means. Said counter knife co-operates with knives that rotate along with the harvesting means.

In practice the operation of said device has appeared to be unsatisfactory, as the fixed arc shaped counter knife tends to push away the stalks during the forward movement of the device, whilst the closely spaced fingers of the groups cannot hold the stalks sufficiently in a substantially upright position. The consequence of all this is that it is not possible to achieve a regular cutting-off and discharging of the maize stalks by means of the harvesting means.

Further from the EP-A-0 099 527 there is known a device for harvesting maize having harvesting means provided with knives and with drums. In this known device near the lower end of the drum radially projecting fingers are mounted on the outer circumference of a drum, between which fingers the stalks are to be taken up, and be guided further around the outer circumference of the harvesting means. Counter knives are arranged behind stalk guiding means and within the circle described by the free ends of the knives. With this device the stalks are not effectively held in an upright position, however, so that the stalks can make undesired movements while being transported to the rear.

According the invention there has been provided a device for harvesting maize, provided with a frame and with a pair of harvesting means rotatably journalled in the frame about upwardly extending axes of rotation, said harvesting means each being provided with a number of groups of curved fingers placed above one another, said groups being regularly spaced in circumferential direction, whereby during operation each group of fingers can be pivoted forwards and backwards about a pivot axis extending parallel to the axis of rotation of the relevant harvesting means by means of a steering mechanism, whilst on the outer circumference of the harvesting means there are also provided a number of regularly spaced knives, which are mounted on the bottom side of a drum forming part of the harvesting means for cutting off the maize stalks, whilst in front of the drum there are provided a few counter knives co-operating with the knives, said counter knives forming stalk guiding means located side by side, seen in the intended direction of movement of the device, whilst the uppermost and the lowermost fingers of a group of fingers are spaced at distances which are at least equal to a quarter of the diameter of the drum of the harvesting means.

When using the construction according to the invention an effective cutting-off of the stalks can be ensured by the co-operation of the knives and the counter knives, without the counter knives causing undesired displacements of the stalks thereby, whilst undesired displacement of the stalks is also prevented because of the fact that the stalks are supported over a comparatively great length by means of the drums and the fingers co-operating therewith. Consequently an effective cutting-off and transport to the rear of the cut-off stalks can be ensured.

The invention will be further explained hereinafter with reference to an embodiment of the construction according to the invention diagrammatically illustrated in the accompanying figures.

Fig 1 is a diagrammatic top view of a harvesting machine in the shape of a maize chopper hitched to a tractor.

Fig 2 illustrates on a larger-scale, partly in plan view and partly in section, a part of the device illustrated in fig 1.

Fig 3 is a side view of fig 2.

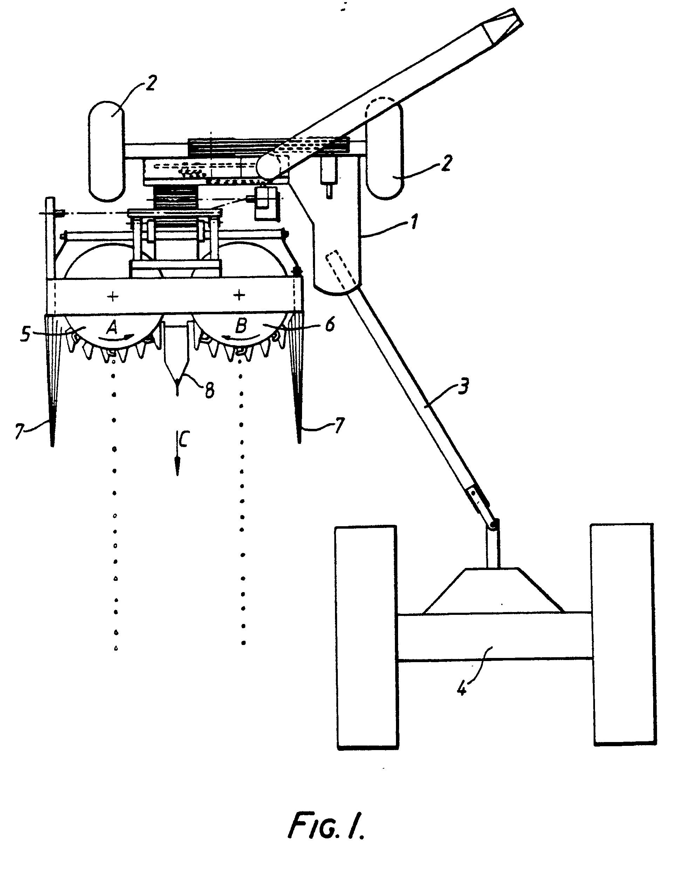

The maize chopper illustrated in fig 1 comprises a frame 1 supported by ground wheels 2. The embodiment of the maize chopper illustrated in fig 1 can be hitched to a tractor 4 in the usual manner by means of a drawbar 3.

The maize chopper is further provided with a pair of harvesting means 5 and 6 lying side by side which, seen in plan view (fig. 1), are located between two stalk dividers 7 extending forwardly beyond the harvesting means. Between the two harvesting means 5 and 6 there is provided a further forwardly extending stalk divider 8.

The harvesting means 5 and 6 are rotatable about upwardly extending axes of rotation in the directions according to the arrows A and B respectively, all this in such a manner that cut-off maize stalks can be led to the rear between the two harvesting means 5 and 6 toward means by means of which the maize stalks may be crushed and chopped up. As said means for the possible crushing and chopping-up of the maize stalks do not form part of the invention and may have a construction usual for such maize choppers the construction of said means will not be considered in more detail.

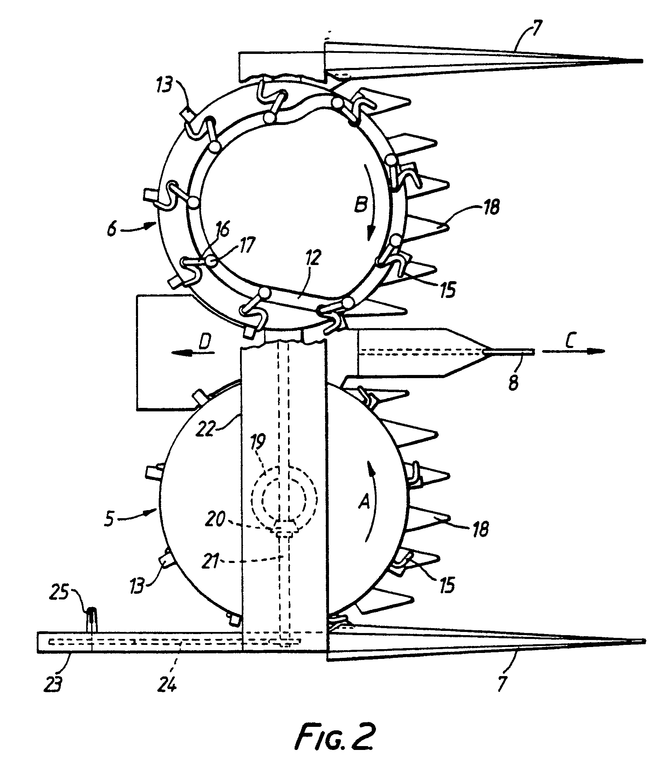

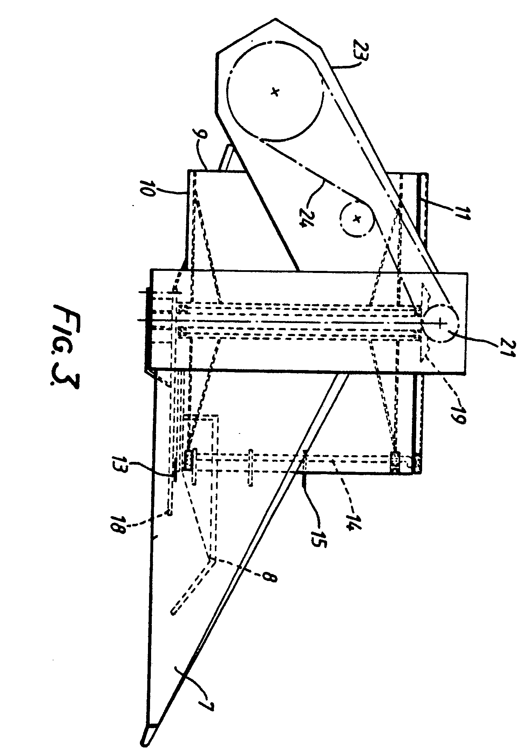

As appears in particular from figs 2 and 3 each harvesting means 5 and 6 comprises a drum-shaped body 9 extending concentrically about the axis of rotation 6 of the relevant harvesting means, the outer wall of said body determining the outer circumference of said harvesting means.

The drum-shaped body 9 is closed at the bottom side by a plate 10 extending vertically to the axis of rotation. At the top side the drum is closed by a plate 11 extending parallel to the plate 10 and being fixed to the frame, in which plate 11 there is provided a groove 12 which is open at the bottom side of the plate.

On the bottom side of the plate 10 rotating with the drum 9 during operation there are mounted, regularly spaced, a number of outwardly projecting knives 13.

Inside the drum 9, near every knife 13, there is located a shaft 14 extending parallel to the axis of rotation of the drum. The shaft 14 is thereby journalled freely rotatably about its longitudinal axis in bearings mounted in the interior of the drum. On the shaft 14 there are mounted three fingers 15 which can move through holes provided in the wall of the drum 9. On the upper end of each shaft 14 there is furthermore mounted an arm 16 extending transversely to said shaft 14. At the outer end of each arm 16 there is provided a roll 17, which is accommodated in the groove 12.

As appears in particular from fig 3 the distance between the outermost fingers 15 of a group is about equal to half the height of the drum, whilst the lowermost finger of the relevant group is located near the bottom side of the drum.

Seen in the intended direction of movement of the device, according to arrow C, a number of forwardly extending plate-shaped stalk guiding means 18 are mounted in front of each harvesting means in such a manner that said stalk guiding means operate as counter knives for the knives 13 mounted on the drum, as said knives 13 slide over said counter knives 18 during rotation of the drum.

As is furthermore illustrated in figs 2 and 3 conical gear wheels 19 are mounted on the upper ends of the drums, said gear wheels being in engagement with conical gear wheels 20 which are mounted on a horizontally extending shaft 21, which is accommodated in a hollow frame beam 22 extending above the harvesting means 5 and 6. One end of the shaft 21 is coupled, via a belt or chain drive 24 located inside a casing 23, to a shaft 25 projecting from the casing 23, which shaft can be driven, via intermediate shafts and gears (not shown), in the usual manner from the power take-off of a tractor moving the device along during operation.

During the movement of the device across the field a maize stalk will be caught by one of a pair of stalk guiding means 18 lying side by side and then be cut off by a knife 13 co-operating with a relevant stalk guiding means. The stalk in question will simultaneously be caught in the hook-shaped means located above the knives and rotating along therewith, said hook-shaped means projecting from the drums near the front of the device, as appears from fig 2.

Thus the cut-off stalks are supported near their bottom sides over a comparatively large part of their length by the outer wall of the drum 7 and the hook-shaped means or fingers 15 co-operating therewith. Thus the cut-off stalks are carried along by the harvesting means and moved to the rear between the harvesting means in order to be delivered there, as indicated by means of the arrow D, to parts of the maize chopper or the like which process the stalks further.

As will be apparent, in particular from fig 2, the fingers 15, located above one another and belonging to a group, are thereby gradually pivoted, by means of the steering mechanism formed by the groove 12 and the roll 17, about the longitudinal axis of the shaft 14 carrying said fingers 15, such that they are pulled loose in the interior of the drum and thus release the maize stalks.

It will be apparent that variations and/or alterations to the embodiment described hereinabove and illustrated in the figures are conceivable within the spirit and scope of the invention. Thus each group of fingers located above one another comprises three fingers 15 in the illustrated embodiment. It will be apparent, however, that possibly two fingers will be sufficient or that more than three fingers may be provided.

Instead of fixing the knives 13 to the drum it is also conceivable to mount said knives on the bottom ends of the shafts 14, so that they carry out a shearing movement during operation.

## Claims

1. Device for harvesting maize, provided with a frame (1) and with a pair of harvesting means (5, 6) rotatably journalled in the frame (1) about upwardly extending axes of rotation, said harvesting means (5,6) each being provided with a number of groups of curved fingers (15) placed above one another, said groups being regularly spaced in circumferential direction, whereby during operation each group of fingers (15) can be pivoted forwards and backwards about a pivot axis (14) extending parallel to the axis of rotation of the relevant harvesting means (5, 6) by means of a steering mechanism (12, 16, 17), whilst on the outer circumference of the harvesting means (5, 6) there are also provided a number of regularly spaced knives (13), which are mounted on the bottom side of a drum (9) forming part of the harvesting means (5, 6), for cutting off the maize stalks, whilst in front of the drum there are provided a few counter knives (18) cooperating with the knives (13), said counter knives (18) forming stalk guiding means located side by side, seen in the intended direction of movement (C) of the device, whilst the uppermost and the lowermost fingers (15) of a group of fingers (15) are spaced at distances which are at least equal to a quarter of the diameter of the drum (9) of the harvesting means (5,6).

2. Device according to claim 1, characterized in that the height of the drum (9) is at least substantially equal to the diameter of the drum (9).

3. Device according to claims 1 or 2, characterized in that the uppermost finger (15) of a group of fingers (15) is located approximately halfway up the drum (9).

4. Device according to any one of the preceding claims, characterized in that five to seven stalk guiding means (18) are provided in front of the drum (9).

5. Device according to any one of the preceding claims, characterized in that the knife (13) has a fixed connection with a group of fingers (15).


**Revendications**

1. Appareil de récolte de maïs, ayant un châssis (1) et deux dispositifs de récolte (5, 6) qui peuvent tourillonner dans le châssis (1) autour d'axes de rotation dirigés vers le haut, les dispositifs de récolte (5, 6) ayant chacun un certain nombre de groupes de doigts courbes (15) placés les uns au-dessus des autres, les groupes étant régulièrement espacés en direction circonférentielle, si bien que, pendant le fonctionnement, chaque groupe de doigts (15) peut pivoter vers l'avant et vers l'arrière autour d'un axe de pivotement (14) qui est parallèle à l'axe de rotation du dispositif correspondant de récolte (5, 6) sous la commande d'un mécanisme de direction (12, 16, 17), alors qu'un certain nombre de couteaux régulièrement espacés (13) sont aussi placés à la circonférence externe des dispositifs de récolte (5, 6) et sont montés à la face inférieure d'un tambour (9), qui fait partie du dispositif de récolte (5, 6), afin qu'ils coupent les tiges de maïs, alors que quelques supports de coupe (18) sont disposés en avant du tambour et coopèrent avec les couteaux (13), les supports de coupe (18) formant des dispositifs de guidage des tiges qui sont placés côte à côte, dans la direction prévue de déplacement (C) de l'appareil, alors que le doigt le plus haut et le doigt le plus bas (15) d'un groupe de doigts (15) sont séparés par des distances qui sont au moins égales au quart du diamètre du tambour (9) du dispositif de récolte (5, 6).

2. Appareil selon la revendication 1, caractérisé en ce que la hauteur du tambour (9) est au moins sensiblement égale au diamètre du tambour (9).

3. Appareil selon la revendication 1 ou 2, caractérisé en ce que le doigt le plus haut (15) d'un groupe de doigts (15) est placé approximativement à mi-hauteur du tambour (9).

4. Appareil selon l'une quelconque des revendications précédentes, caractérisé en ce que cinq à sept dispositifs (18) de guidage de tiges sont placés en avant du tambour (9).

5. Appareil selon l'une quelconque des revendications précédentes, caractérisé en ce que le couteau (13) est raccordé à demeure à un groupe de doigts (15).


**Ansprüche**

1. Maiserntevorrichtung, mit einem Rahmen (1) und einem Paar Erntemitteln (5, 6), die im Rahmen (1) um sich nach oben erstreckende Drehachsen drehbar gelagert sind, wobei jedes Erntemittel (5, 6) mit einer Anzahl von Gruppen übereinander plazierter kurvenförmiger Finger (15) versehen ist, deren Gruppen in Umfangsrichtung in regelmäßigen Abständen angeordnet sind, wobei während des Betriebes der Vorrichtung jede Gruppe an Fingern (15) mittels eines Steuerungsmechanismus (12, 16, 17) um eine parallel zur Drehachse des jeweiligen Erntemittels (5, 6) erstreckende Schwenkachse (14) vorwärts und rückwärts schwenkbar ist, mit einer ferner am äußeren Umfang der Erntemittel (5, 6) in regelmäßigen Abständen angeordneten Anzahl von Klingen (13), die an der Bodenseite einer einen Teil der Erntemittel (5, 6) bildenden Trommel (9) montiert sind, um die Maisstengel abzuschneiden, wogegen vor der Trommel einige mit den Klingen (13) kooperierende Gegenschneiden (18) angeordnet sind, die in der beabsichtigten Bewegungsrichtung (C) der Vorrichtung Seite-an-Seite angeordnete Maisstengel-Führungsmittel bilden, und wobei die obersten und die untersten Finger (15) einer Gruppe an Fingern (15) mit zumindest einem Viertel des Durchmessers der Trommel (9) der Erntemittel (5, 6) beabstandet sind.

2. Maiserntevorrichtung nach Anspruch 1, **dadurch gekennzeichnet**, daß die Höhe der Trommel (9) zumindest im wesentlichen gleich dem Durchmesser der Trommel (9) ist.

3. Vorrichtung nach den Ansprüchen 1 oder 2, **dadurch gekennzeichnet**, daß die obersten Finger (15) einer Gruppe von Fingern (15) annähernd auf halbem Weg in Aufwärtsrichtung an der Trommel (9) angeordnet sind.

4. Maiserntevorrichtung nach einem der vorhergehenden Ansprüche, **dadurch gekennzeichnet**, daß vor der Trommel (9) fünf bis sieben Stengel-Führungsmittel bildende Gegenschneiden (18) vorgesehen sind.

5. Maiserntevorrichtung nach einem der vorhergehenden Ansprüche, **dadurch gekennzeichnet**, daß jede Schneide (13) eine feste Verbindung mit einer Gruppe von Fingern (15) aufweist.

FIG. 1.

FIG. 2

Fig.3